# EUROPEAN PATENT SPECIFICATION

(11) **EP 4 371 879 B1**
(45) Date of publication and mention of the grant of the patent: **06.05.2026**
(21) Application number: 22208165.5
(22) Date of filing: 17.11.2022
(51) Int. Cl.: B64D 11/04

(54) **AIRCRAFT GALLEY INSERT**
FLUGZEUGBORDKÜCHENEINSATZ
INSERT DE CUISINE D'AVION

(43) Date of publication of application: 22.05.2024
(73) Proprietor: B/E Aerospace, Inc., Winston Salem, NC 27105 (US)
(72) Inventor: PANJER, Frederik Adrian Stephan, Maarsbergen (NL)
(74) Representative: Dehns

(56) References cited:
- EP-B1- 2 874 880
- GB-A- 2 571 986
- US-A1- 2021 221 513
- US-A1- 2021 291 986

## Description

### TECHNICAL FIELD

The present disclosure relates to an aircraft galley insert with heating equipment and to a method of operating such an aircraft galley insert.

### BACKGROUND

Design and qualification requirements for aircraft galley systems are the subject of regulatory documents such as joint aviation requirements (JAR). The present disclosure relates to galley inserts comprising heating equipment, such as, but not limited to, ovens and furnaces, including convection, microwave and steam ovens, bun, packed food and plate warmers, coffee makers, hot beverage makers, water boilers, water heaters, rice cookers, coffee warmers and hot jugs. The term "heated galley insert" is used hereinbelow for such types of galley inserts, irrespective of the specific heating mode and purpose.

An aircraft galley insert (GAIN) device is disclosed in US 2021/221513 A1. In embodiments, the aircraft GAIN device may be an oven or chiller, and includes an exterior housing installable in an aircraft galley structure and a forward door operable via a handle. The GAIN device includes an inner shell fashioned of a one or more sheets of titanium (e.g., Grade 1 and/or Grade 2) of optimal thickness. The inner shell contains an interior cavity within its upper, lower, left-side, and right-side surfaces, the interior cavity accessible via the forward door. The GAIN device includes a backplate fastened to the inner oven shell and defining a rear surface of the interior cavity, the backplate fashioned of a thicker sheet of titanium.

EP 2 874 880 A1 relates to an aircraft galley comprising at least one cooling compartment for receiving a container for goods to be cooled, characterised in that at the rear of the galley there is arranged at least one panel connected to a cooling air cell and an exhaust air discharge and having integrated air ducts is arranged, in which at least one exhaust air opening directed towards the cooling compartment and at least one cooling air opening directed towards the cooling compartment are provided, the at least one cooling air opening being provided above the at least one exhaust air opening.

Galley inserts, when installed in an aircraft galley, usually are required to be designed to prevent operating temperatures of all external surfaces exposed to flight and cabin crew from exceeding certain temperature levels, such as 71 °C (160 °F) for health and safety reasons. For bare or painted metal surfaces and glass or ceramic surfaces, these temperature levels may even be lower. This means that there may generally be a need for effective heat dissipation from a galley insert to the environment.

Regarding such heat dissipation from galley inserts, particularly to a surrounding space which is at least partly taken by a galley structure, there is still a need for improvements.

### SUMMARY

A galley insert with heating equipment is proposed herein which, particularly by virtue of an improved, temperature-dependent, and variable deflection of a hot exhaust air stream from the galley insert, provides significant advantages over conventional solutions.

Generally, exhaust air from heated galley inserts influences the temperature of the surrounding galley structure. Current air vent designs in galley inserts focus the exhaust air stream to a fixed location. This can lead to hot spots on the galley structure.

If the flow direction of the exhaust air is be made variable and temperature-dependent, as is the case according to embodiments disclosed herein, the occurrence of hot spots can be prevented. Embodiments disclosed herein may particularly help passing certification requirements on external temperatures of galley inserts, such as referred to above, which are observed to get more and more strict in recent times.

A galley insert for an aircraft galley is proposed herein. The galley insert comprises heating equipment and an exhaust arrangement configured to pass an exhaust air stream out of the galley insert, wherein the exhaust arrangement comprises a plurality of deflection lamellas configured to adjust a direction of the exhaust air stream. The air forming the exhaust air stream particularly is propelled by a ventilator arrangement within the galley insert.

The terms "galley" and "galley insert" ("GAIN") are used herein in the customary meaning in the field of aviation technology. Particularly, the present disclosure relates to a modular galley for an aircraft in which a galley structure comprising several vertical structural or comparting elements and horizontal structural or comparting elements is provided and, in embodiments, fixedly mounted in the aircraft. Between the vertical and horizontal elements, compartments in the form of slide-in spaces or "bays" may be provided which may be adapted for slide-in galley inserts. Locking structures may be provided for holding said galley inserts in place. The bays and the slide-in galley inserts may comprise structures such as rollers and tracks or guiding grooves and guiding rails, but this is not a prerequisite of embodiments disclosed herein. The bays of an aircraft galley may be configured for accommodating slide-in galley inserts, but galley inserts in the form of built-in devices or equipment for any possible use may be provided. A galley as envisaged herein may comprise elements that form an essentially unchanged basic structure, and the basic structure may comprise connection elements for the mechanical connection of further structural elements, add-on devices, built-in devices, items of equipment and/or slide-in devices. Any interfaces for the supply to devices that are provided in the galley may also be provided in embodiments, wherein the connection elements and interfaces may be standardized such that various structural elements, add-on devices, built-in devices, items of equipment and/or slide-in devices can be interchanged or affixed at various locations.

While a certain deflection of an exhaust air stream may, in conventional galley inserts and arrangements, be present and deflection lamellas may, e.g., rigidly formed from the wall material, such as a metal sheet, by embossing or other ways of manufacturing, it is proposed herein that at least some of the deflection lamellas are angularly adjusted on the basis of a temperature of the exhaust air stream using one or more temperature-dependent actors. This temperature-dependent variability generates the advantage of avoiding overheating and hot spots as mentioned above.

In an embodiment, the, or at least one of the, temperature dependent actors may be, or include, one or more bimetallic coils or other bimetallic elements. Bimetallic coils are advantageous as they are "passive" actuation elements, i.e., an actuation is possible without control requirements such as present for an electro-motoric actor connected with a temperature sensor, for example. This increases robustness and reduces energy consumption of the whole system. To increase an adjustment force, ensembles of several bimetallic coils may be used and in parallel connected to an element to be adjusted, and the embodiments are not limited to single coils or certain types of bimetallic actors, even if referred to hereinbelow for reasons of conciseness.

In embodiments, one or more adjustment rods or levers may be provided which is or are configured to engage with one or more groups of the deflection lamellas. This allows for a reduced space requirement as individual actuation units can be dispensed with, and a unison operation of a plurality of deflection lamellas is possible, should this be desired.

In a galley insert according to an embodiment, the, or at least one of the, adjustment rods or levers may be configured to engage with the, or at least one of the, temperature-dependent actors via one or more mechanical couplings. This provides the advantage that an adjustment force of the one or more temperature-dependent actors may be particularly effectively transmitted to the one or more adjustment rods.

In an embodiment, the, or at least one of the, mechanical couplings may be provided as a rotatable connection, a rigid connection, or a geared coupling such as a rack-and-pinion arrangement. For example, using a geared coupling, a movement of the one or more temperature-dependent actors in a first movement range may be translated to a movement of the one or more adjustment rods in a second, larger or smaller, movement range. Similar considerations apply for the translation of corresponding adjustment forces.

In embodiments of a galley insert as disclosed herein, at least one of the deflection lamellas may be individually coupled with the, or at least one of the, temperature-dependent actors, the "individual" coupling not excluding presence of intermediate elements such as rods, levers, etc. This allows for an individual adjustment of lamellas which may be particularly well adapted to the local temperature and may serve in a particularly flexible distribution of heat.

In an embodiment proposed herein, the, or at least of the, temperature-dependent actors may be configured to provide a continuous adjustment depending on the temperature effective at an actor location. This is particularly helpful as heat may be directed to a continuous range of target locations and heat may therefore be particularly well distributed. In other embodiments, however, also non-continuous temperature-dependent actors, such as "snap" bimetallic actors, may be used.

In embodiments of a galley insert as proposed herein, the exhaust air stream may be generated, as mentioned, using an exhaust fan arrangement arranged within a housing of the galley insert. The one or more temperature-dependent actors may particularly be positioned within the air stream thus generated, and the deflection lamellas may particularly be associated to an opening of a housing of the galley insert.

The galley insert may, in embodiments contemplated herein, be configured to be operated as an oven selected from a convection oven, a microwave oven, and a steam oven, a bun warmer, a plate warmer, a coffee maker, a beverage maker, a water boiler, a water heater, a rice cooker, a coffee warmer and a hot jug. The solutions proposed herein may therefore be used in a wide range of applications.

A method of heating a food or beverage or food or beverage carrier in a galley of an aircraft is also proposed herein, wherein a galley insert as discussed hereinbefore in different embodiments may be used. As to particular advantages of such a method and of certain embodiments thereof, explicit reference is made to the explanations above which likewise apply for such a method and its embodiments.

Embodiments of the galley insert proposed herein, and of corresponding methods will now be described by way of example only, with reference to the drawings.

### BRIEF DESCRIPTION OF THE DRAWINGS

Figure 1 illustrates a galley insert in an isometric view.
Figure 2 illustrates a galley insert in a longitudinal sectional view in a first state of operation.
Figure 3 illustrates the galley insert according to Figure 2 in a second state of operation.
Figure 4 illustrates the galley insert according to Figure 2 in a third state of operation.
Figure 5 illustrates a galley insert in a longitudinal sectional view in a first state of operation.
Figure 6 illustrates the galley insert according to Figure 5 in a second state of operation.
Figure 7 illustrates a galley insert in a longitudinal sectional view in a state of operation.
Figures 8A and 8B schematically illustrate an adjustment drive.
Figures 9A and 9B schematically illustrate an adjustment drive.

### DETAILED DESCRIPTION

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to embodiments likewise may apply to methods, processes, procedures, etc. according to embodiments and vice versa.

The various embodiments described herein are presented only to assist in understanding and teaching the claimed features. These embodiments are provided as a representative sample of embodiments only and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised, and modifications may be made without departing from the scope of the claimed invention. Various embodiments of the invention may suitably comprise, consist of, or consist essentially of, components, features, parts, steps, means, etc., other than those specifically described herein. In addition, this disclosure may include other inventions not presently claimed, but which may be claimed in future, particularly when encompassed by the scope of the independent claims.

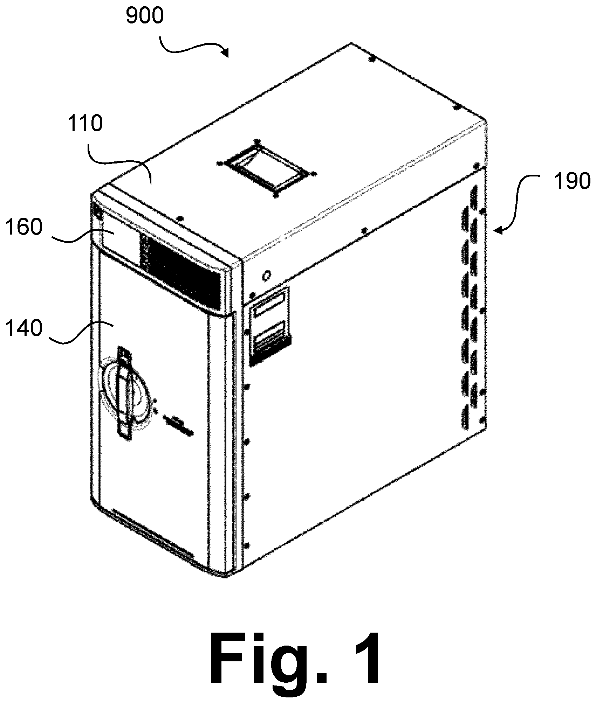

Figure 1 schematically illustrates a galley insert of the type described above and an isometric view. The insert as shown in Figure 1 is designated 1000. Galley insert 1000 represents, for example, an oven insert such as may be used in the galley of an aircraft for heating food and/or beverages. Galley insert 1000 comprises a wall 110, which, in the example illustrated, is formed by a plurality of wall panels. Wall 110 provides a certain thermal insulation of galley insert 1000 towards the outside.

In the external view according to Figure 1, a door unit 140 is visible, which allows access to an oven chamber that is not visible in Figure 1. Furthermore, a front panel 160 is visible, which can be used, for example, for inputting and/or outputting information to a control unit of galley insert 1000, which is also not visible in Figure 1, and which may include an air inlet grid whose function will be evident from the explanations below. Galley insert 1000 may comprise carrying structures which are not indicated with reference numerals.

In order to allow heat to be dissipated from the galley insert 1000, an exhaust arrangement 190 is provided, which in the example shown has rigidly designed deflecting lamellas. As mentioned at the outset, the rigidity of such lamellas in conventional arrangements can result in hot exhaust air from the galley insert 1000 acting more strongly on localized regions of the surroundings, particularly of a galley structure into which the galley insert is inserted, so that heat accumulation or hot spots can occur.

Therefore, embodiments of the present disclosure, which are illustrated in connection with the subsequent Figures, provide for a flexible and particularly temperature dependent deflection of exhaust air, which particularly is realized by a bimetallic actor or other temperature-dependent actor, such that hot spots and local temperature accumulation, particularly in a galley structure, can be avoided.

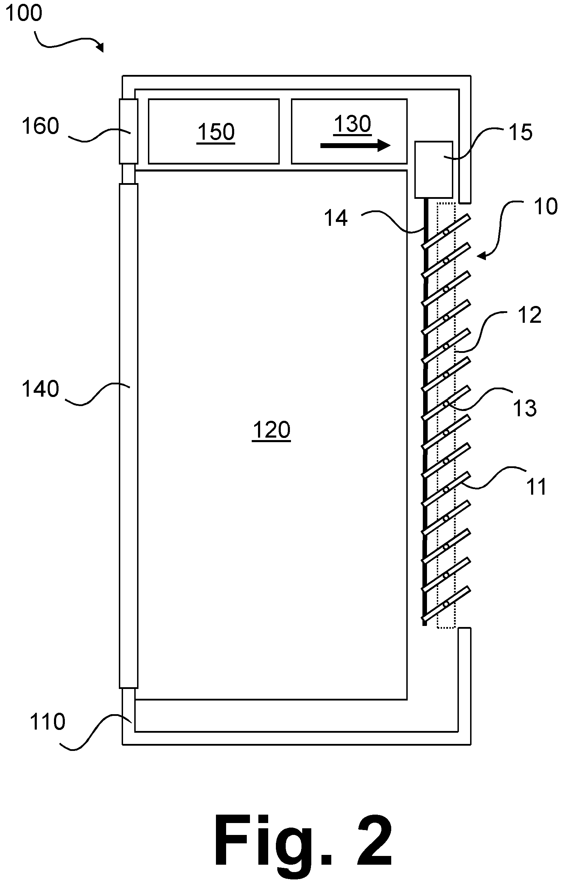

Figure 2 illustrates a galley insert which is configured accordingly in a longitudinal section. The galley insert shown in Figure 2 is indicated with reference numeral 100 and may, except for the differences discussed below, essentially or in parts correspond in size, technical realization and function, to galley insert 1000 shown in Figure 1.

In the longitudinal sectional view of Figure 2, an oven chamber 120 is schematically illustrated. On top of the oven chamber 120, an exhaust fan arrangement 130 may be provided which may generate an air stream as indicated with a bold arrow. This air stream may dissipate heat away from oven chamber 120 or the proximity thereof towards, conventionally, an exhaust arrangement 190 as shown in Figure 1, particularly at the sides of galley insert 110. A control unit 150 is also illustrated in Figure 2.

Galley insert 100 according to Figure 2 comprises an exhaust arrangement 10 in which a plurality of pivotable deflection lamellas 11 is provided. Be it noted that, while the exhaust arrangement 10 is illustrated in Figure 2 at the back wall of the Galley insert 100 for reasons of simplification, a typical location would correspond to a location of the exhaust arrangement 190 as shown in Figure 1, but embodiments disclosed herein are not limited in terms of a specific location. Several exhaust arrangements, in larger or smaller dimensions than depicted, or in different dimensions, different air cross sections, different orientations etc. may be present in embodiments.

Deflection lamellas 11 of the exhaust arrangement are, in the example illustrated, rotatably or pivotably mounted at a rotational axis 13, which is oriented vertically to the paper plane in the example illustrated, to a mounting structure 12 or may be otherwise be made to be rotatable. An adjustment rod 14 is provided which may be longitudinally positioned using an adjustment drive 15, such as further explained below. Here, and below, elements provided in plurality may be designated with a reference numeral only once and the same, or different, explanations may apply to all of these elements.

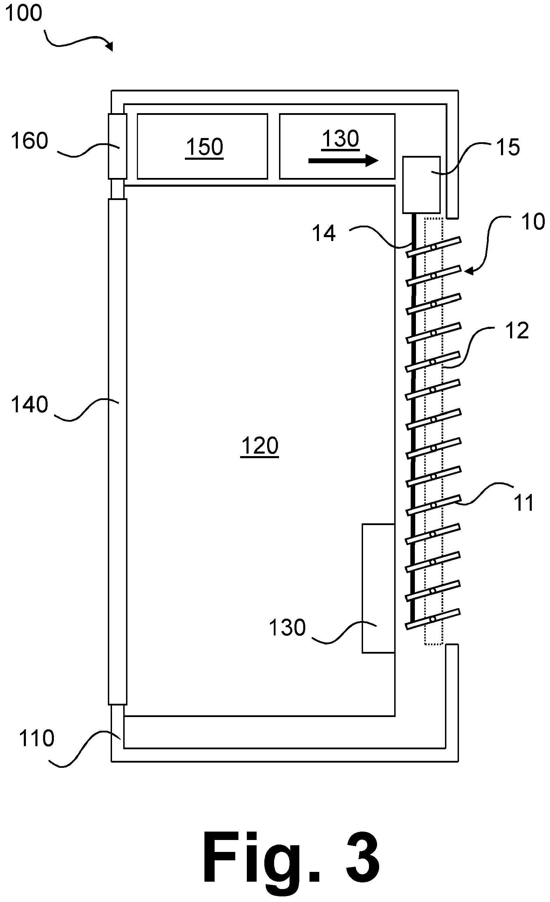

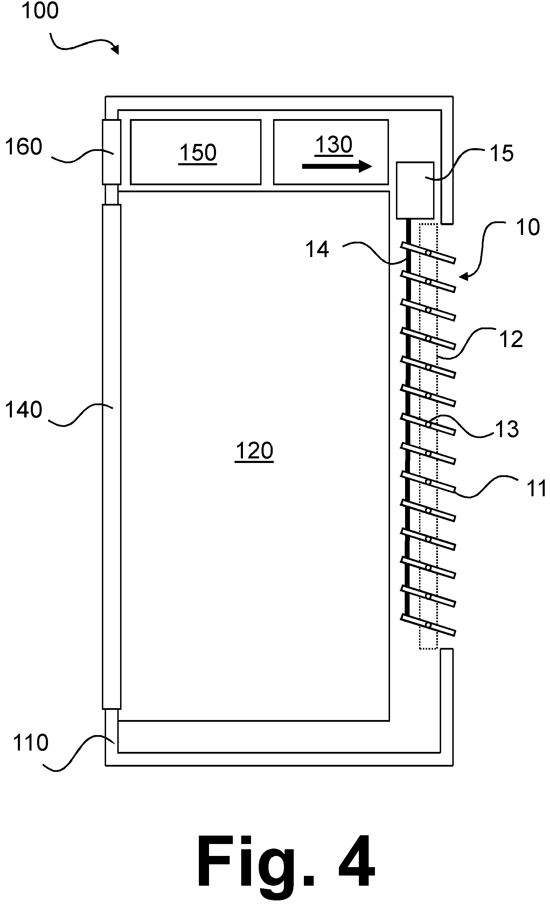

Adjustment drive 15, which may comprise a bimetallic actor, is adapted to perform an adjustment of deflection lamellas 11 by longitudinally displacing adjustment rod 14, which in turn engages with deflection lamellas 11 via suitable engagement structures such as oblong holes and changes their angular positions. Such an adjustment is particularly illustrated with reference to Figures 3 und 4 which illustrate galley insert 100, which is shown in Figure 2 in a first operation state, in a second and third operation state resulting from such an adjustment.

Be it noted that the orientation of deflection lamellas 11 and the overall exhaust arrangement 10 may be arbitrarily selected, based on needs of heat dissipation, special confinement, general practicability, optical reasons, mechanical load, etc. Even if distinct operation states are illustrated in Figures 2, 3 and 4, certain embodiments include a continuous adjustment correlating to the temperature rather than a stepwise adjustment. This allows for a particularly advantageous distribution of heat.

In all cases, adjustment drive 15 may particularly be arranged in an air stream of the air flow generated by the exhaust fan arrangement 130, and indeed may be placed, in embodiments, at any position suitable, particularly at a position at which a representative, maximum, minimum, or average temperature may generally be present.

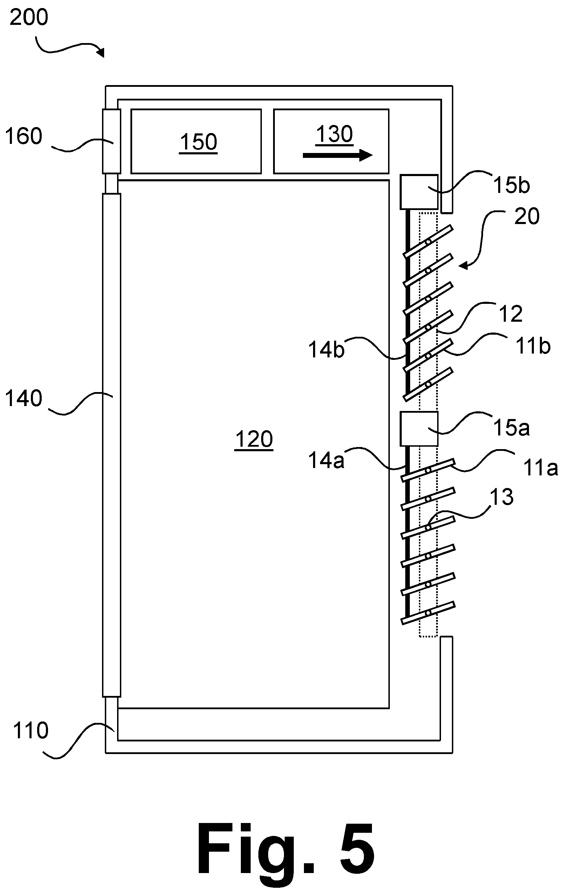

Figure 5 illustrates a further embodiment of a galley insert which is referred to with reference numeral 200. Galley insert 200 may, except for the differences discussed below, essentially or at least in parts correspond in size, technical realization and function of its parts, to galley inserts 1000 and 100 shown in Figures 1 to 4.

As illustrated in Figure 5, an exhaust arrangement, which is indicated 20 in Figure 5, may comprise two groups of deflection lamellas 11a, 11b which may be adjusted in groups by adjustment rods 14a and 14b by adjustment drives 15a and 15b. Each adjustment drive 15a and 15b may be positioned as discussed before. For example, each of the adjustment drives 15a and 15b may comprise a bimetallic actors for this purpose.

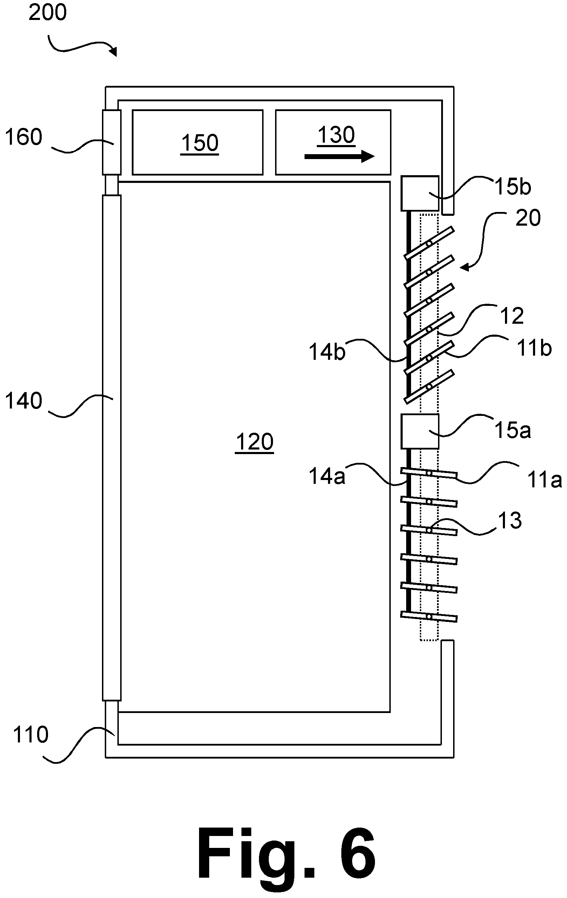

Such an adjustment is particularly illustrated with reference to Figure 6, in which illustrate galley insert 200, which is shown in Figure 5 in a first operation state, is shown in a second operation state resulting from such an adjustment. An adjustment as illustrated here may particularly serve to deflect exhaust air to different points or locations in the surroundings and may a particularly advantageous adaptation to varying temperature conditions. Again, even if distinct operation states are shown in Figures 5 and 6, these may in embodiments rather be snapshots of a continuous adjustment according to the principles already discussed.

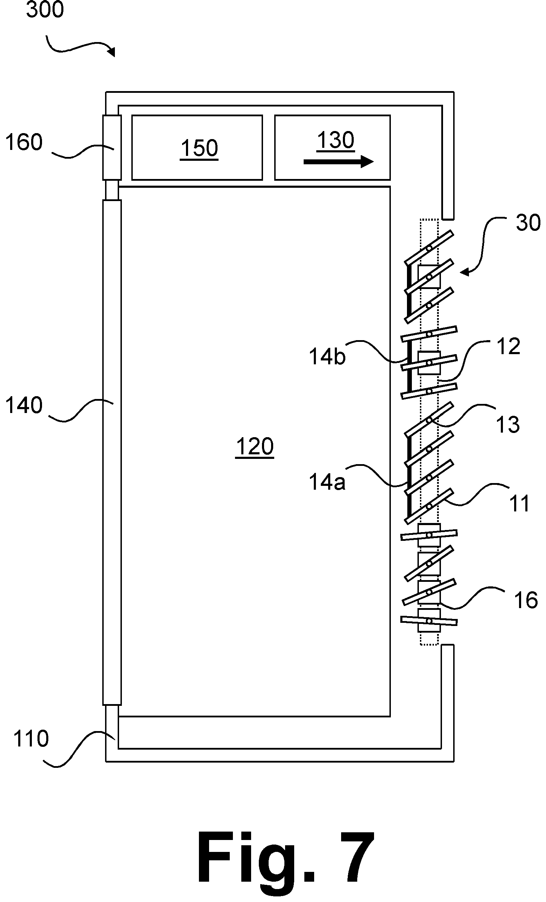

Figure 7 illustrates a further embodiment of a galley insert which is referred to with reference numeral 300. Galley insert 300 may, except for the differences discussed below, essentially or at least in parts correspond in size, technical realization and function, to galley inserts 1000, 100 and 200 shown in Figures 1 to 6.

As illustrated in Figure 7, deflection lamellas 11 in an exhaust arrangement 30 may be actuated, individually or in groups, in an exhaust arrangement 30, by individual adjustment drives 16 which may be located in proximity of the rotational axes 13 to directly adjust the associated deflection lamella 11. An adjusted lamella may be coupled to further deflection lamellas 11, to provide an unison adjustment, or they may be uncoupled, in order to even better distribute exhaust air.

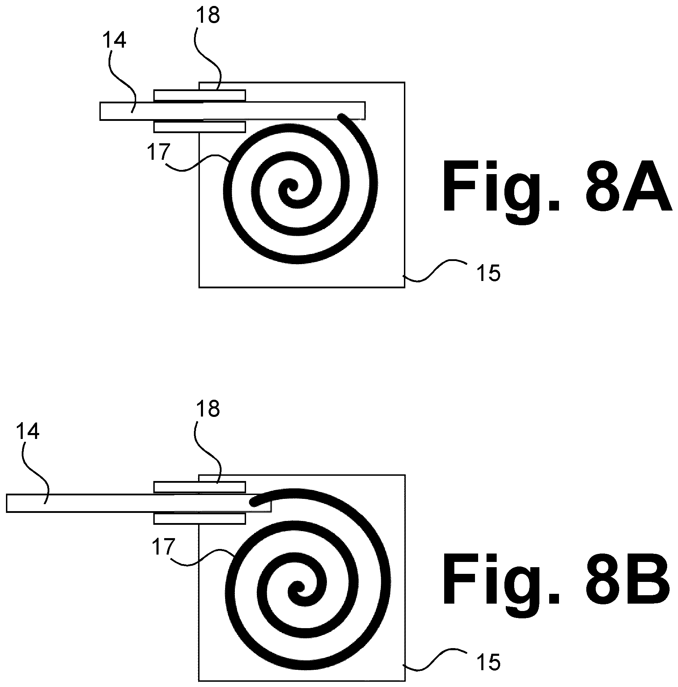

Figures 8A and 8B illustrate adjustment drives 15 which could be used in embodiments as shown before, particularly in galley inserts 100 and 200.

In the adjustment drives 15, a bimetallic coil 17, or a set of bimetallic coils, such as to increase an adjustment force, is installed. Bimetallic coil 17 or the coils of a corresponding arrangement may be centrally fixed to a structure, and the opposite end may be connected to an adjustment rod 14 as shown before. By virtue of an expansion of coil 17, adjustment rod 14 may be deployed, as shown in Figure 8B vs. Figure 8A, from a retracted state to a deployed state. For mechanical guidance of adjusting rod 14, a guiding arrangement 18 such as a linear guide or a hollow shaft may also be provided.

Other means of interconnection between the bimetallic coil 17 and the adjustment rod 14 may be provided, such as rack-and-pinion drives where the centre of the bimetallic coil may be mechanically coupled to a pinion and the opposite end may be fixed and the pinion may engage with a rack or rack portion at the adjustment rod 14. This may result in a better utilization of the relatively low forces present.

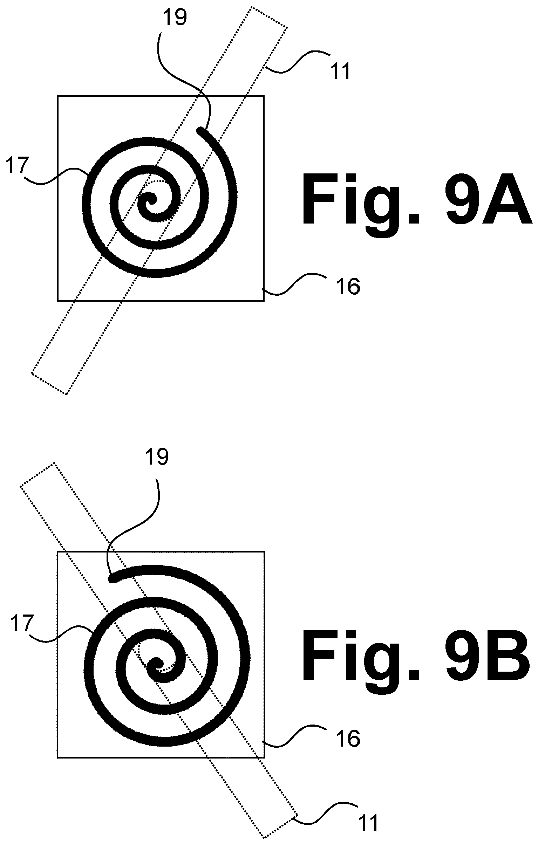

and Figures 9A and 9B illustrate adjustment drives 16 of a type utilizable e.g. in the embodiment shown in Figure 7, i.e. galley insert 300. Herein, a bimetallic coil 17, or a set of bimetallic coils may be coupled directly to a deflection lamella 11 or its axis 13 to allow for a direct transmission of the adjustment force.

## Claims

1. A galley insert (100, 200, 300) for an aircraft galley, the galley insert (100, 200, 300) comprising heating equipment (120) and an exhaust arrangement (10, 20, 30) configured to pass an exhaust air stream out of the galley insert (100, 200, 300), **characterized in that** the exhaust arrangement (10, 20, 30) comprises a plurality of deflection lamellas (11, 11a, 11b) configured to adjust a direction of the exhaust air stream, wherein at least some of the deflection lamellas (11, 11a, 11b) are angularly adjusted on the basis of a temperature of the exhaust air stream using one or more temperature-dependent actors.

2. The galley insert (100, 200, 300) according to claim 1, wherein the, or at least one of the, temperature dependent actors is or includes one or more bimetallic coils (17).

3. The galley insert (100, 200, 300) according to claim 1 or 2, wherein one or more adjustment rods (14, 14a, 14b) are provided which is or are configured to engage with one or more groups of the deflection lamellas (11, 11a, 11b).

4. The galley insert (100, 200, 300) according to claim 3, wherein the, or at least one of the, adjustment rods is configured to engage with the, or at least one of the, temperature-dependent actors via one or more mechanical couplings.

5. The galley insert (100, 200, 300) according to claim 4, wherein the, or at least one of the, mechanical couplings is provided as a rotatable connection, a rigid connection, or a geared coupling such as a rack-and-pinion arrangement.

6. The galley insert (100, 200, 300) according to any one of the preceding claims wherein at least one of the deflection lamellas (11, 11a, 11b) is individually coupled with the, or at least one of the, temperature-dependent actors.

7. The galley insert (100, 200, 300) according to any one of the preceding claims, wherein the, or at least of the, temperature-dependent actors are configured to provide a continuous adjustment depending on the temperature.

8. The galley insert (100, 200, 300) according to any one of the preceding claims, wherein the exhaust stream is generated using an exhaust fan arrangement (130) arranged within a housing (110) of the galley insert.

9. The galley insert (100, 200, 300) according to any one of the preceding claims being configured to be operated as an oven selected from a convection oven, a microwave oven, and a steam oven, a bun warmer, a plate warmer, a coffee maker, a beverage maker, a water boiler, a water heater, a rice cooker, a coffee warmer and a hot jug.

10. A method of heating a food or beverage or food or beverage carrier in a galley of an aircraft, **characterized in that** a galley insert (100, 200, 300) according to any one of the preceding claims is used.

## Patentansprüche

1. Bordkücheneinsatz (100, 200, 300) für eine Flugzeugbordküche, wobei der Bordkücheneinsatz (100, 200, 300) eine Heizeinrichtung (120) und eine Abluftanordnung (10, 20, 30) umfasst, die konfiguriert ist, um einen Abluftstrom aus dem Bordkücheneinsatz (100, 200, 300) zu leiten, **dadurch gekennzeichnet, dass** die Abluftanordnung (10, 20, 30) eine Vielzahl von Ablenkungslamellen (11, 11a, 11b) umfasst, die konfiguriert ist, um eine Richtung des Abluftstroms anzupassen, wobei wenigstens einige der Ablenkungslamellen (11, 11a, 11b) auf der Basis einer Temperatur des Abluftstroms unter Verwendung eines oder mehrerer temperaturabhängiger Aktoren winkelig angepasst werden.

2. Bordkücheneinsatz (100, 200, 300) nach Anspruch 1, wobei der oder wenigstens einer der temperaturabhängigen Aktoren eine oder mehrere Bimetallspulen (17) ist oder beinhaltet.

3. Bordkücheneinsatz (100, 200, 300) nach Anspruch 1 oder 2, wobei eine oder mehrere Einstellstangen (14, 14a, 14b) bereitgestellt sind, die konfiguriert ist oder sind, um mit einer oder mehreren Gruppen der Ablenkungslamellen (11, 11a, 11b) in Eingriff zu kommen.

4. Bordkücheneinsatz (100, 200, 300) nach Anspruch 3, wobei die oder wenigstens eine der Einstellstangen konfiguriert ist, um über eine oder mehrere mechanische Kopplungen mit dem oder wenigstens einem der temperaturabhängigen Aktoren in Eingriff zu kommen.

5. Bordkücheneinsatz (100, 200, 300) nach Anspruch 4, wobei die oder wenigstens eine der mechanischen Kopplungen als eine drehbare Verbindung, eine starre Verbindung oder eine Getriebekopplung wie etwa eine Zahnstangenanordnung bereitgestellt ist.

6. Bordkücheneinsatz (100, 200, 300) nach einem der vorhergehenden Ansprüche, wobei wenigstens eine der Ablenkungslamellen (11, 11a, 11b) individuell mit dem oder wenigstens einem der temperaturabhängigen Aktoren gekoppelt ist.

7. Bordkücheneinsatz (100, 200, 300) nach einem der vorhergehenden Ansprüche, wobei der oder wenigstens einer der temperaturabhängigen Aktoren konfiguriert ist, um eine kontinuierliche Anpassung in Abhängigkeit von der Temperatur bereitzustellen.

8. Bordkücheneinsatz (100, 200, 300) nach einem der vorhergehenden Ansprüche, wobei der Abluftstrom unter Verwendung einer Abluftgebläseanordnung (130) erzeugt wird, die innerhalb eines Gehäuses (110) des Bordkücheneinsatzes angeordnet ist.

9. Bordkücheneinsatz (100, 200, 300) nach einem der vorhergehenden Ansprüche, der konfiguriert ist, um als ein Ofen, ausgewählt aus einem Konvektionsofen, einem Mikrowellenofen und einem Dampfofen, ein Brötchenwärmer, ein Tellerwärmer, eine Kaffeemaschine, ein Getränkezubereiter, ein Wasserkocher, ein Wassererhitzer, ein Reiskocher, ein Kaffeewärmer und eine Heißkanne betrieben zu werden.

10. Verfahren zum Erwärmen eines Lebensmittels oder Getränks oder eines Lebensmittel- oder Getränketrägers in einer Bordküche eines Flugzeugs, **dadurch gekennzeichnet, dass** ein Bordkücheneinsatz (100, 200, 300) nach einem der vorhergehenden Ansprüche verwendet wird.

## Revendications

1. Insert d'office (100, 200, 300) pour une office d'aéronef, l'insert d'office (100, 200, 300) comprenant un équipement de chauffage (120) et un agencement d'évacuation (10, 20, 30) configuré pour évacuer un flux d'air d'échappement hors de l'insert d'office (100, 200, 300), **caractérisé en ce que** l'agencement d'évacuation (10, 20, 30) comprend une pluralité de lamelles déflectrices (11, 11a, 11b) configurées pour ajuster une direction du flux d'air d'échappement, dans lequel au moins certaines des lamelles déflectrices (11, 11a, 11b) sont ajustées angulairement sur la base d'une température du flux d'air d'échappement à l'aide d'un ou plusieurs actionneurs dépendant de la température.

2. Insert d'office (100, 200, 300) selon la revendication 1, dans lequel le ou au moins l'un des actionneurs dépendant de la température est ou comporte une ou plusieurs bobines bimétalliques (17).

3. Insert d'office (100, 200, 300) selon la revendication 1 ou 2, dans lequel une ou plusieurs tiges de réglage (14, 14a, 14b) sont prévues, qui sont configurées pour venir en prise avec un ou plusieurs groupes de lamelles déflectrices (11, 11a, 11b).

4. Insert d'office (100, 200, 300) selon la revendication 3, dans lequel la ou au moins l'une des tiges de réglage est configurée pour venir en prise avec le ou au moins l'un des actionneurs dépendant de la température par l'intermédiaire d'un ou plusieurs accouplements mécaniques.

5. Insert d'office (100, 200, 300) selon la revendication 4, dans lequel le ou au moins l'un des accouplements mécaniques est prévu comme une liaison rotative, une liaison rigide ou un accouplement à engrenages tel qu'un agencement à crémaillère.

6. Insert d'office (100, 200, 300) selon l'une quelconque des revendications précédentes, dans lequel au moins l'une des lamelles déflectrices (11, 11a, 11b) est accouplée individuellement au ou à au moins l'un des actionneurs dépendant de la température.

7. Insert d'office (100, 200, 300) selon l'une quelconque des revendications précédentes, dans lequel le ou au moins l'un des actionneurs dépendant de la température est configuré pour assurer un réglage continu en fonction de la température.

8. Insert d'office (100, 200, 300) selon l'une quelconque des revendications précédentes, dans lequel le flux d'échappement est généré à l'aide d'un agencement de ventilateur d'extraction (130) disposé dans un boîtier (110) de l'insert d'office.

9. Insert d'office (100, 200, 300) selon l'une quelconque des revendications précédentes, qui est configuré pour fonctionner comme un four choisi parmi un four à convection, un four à microondes, et un four à vapeur, un réchaud pour petits pains, un chauffe-assiettes, une cafetière, un dispositif de fabrication de boisson, une bouilloire, un chauffe-eau, un cuiseur à riz, un chauffe-café et une carafe chaude.

10. Procédé de chauffage d'un aliment ou d'une boisson ou d'un porte-aliments ou porte-boissons dans une office d'un aéronef, **caractérisé en ce qu'**un insert d'office (100, 200, 300) selon l'une quelconque des revendications précédentes est utilisé.
